# FASCICULE DE BREVET EUROPEEN

(11) **EP 0 753 653 B1**
(45) Date de publication et mention de la délivrance du brevet: **01.12.1999**
(21) Numéro de dépôt: 96401422.9
(22) Date de dépôt: 27.06.1996
(51) Int. Cl.: F02K 7/10

(54) **Statoréacteur pour aéronef à vol supersonique et/ou hypersonique**
Staustrahltriebwerk für Über- und/oder Hyperschallflugzeug
Ramjet for supersonic and/or hypersonic vehicle

(30) Priorité: 12.07.1995 FR 9508417
(43) Date de publication de la demande: 15.01.1997
(73) Titulaire: AEROSPATIALE SOCIETE NATIONALE INDUSTRIELLE, 75016 Paris (FR)
(72) Inventeur: Chevalier, Alain, 18000 Asnieres-les-Bourges (FR); Bouchez, Marc, 18000 Bourges (FR); Levine, Vadim, Moscou (RU); Avrachkov, Valery, 117 334 Moscou (RU); Davidenko, Dimitri, Moscou (RU)
(74) Mandataire: Bonnetat, Christian

(56) Documents cités:
- GB-A- 2 222 635
- US-A- 3 279 194
- US-A- 5 072 581
- US-A- 5 226 455

## Description

La présente invention concerne un statoréacteur pour aéronef à vol supersonique et/ou hypersonique, destiné à fonctionner sur une large plage de vitesses. La plage de vitesses envisagée se situe ainsi entre des nombres de Mach de 1-2 à 15-20.

Jusqu'à présent, il n'existe pas de statoréacteur susceptible de fonctionner, en conservant constamment une efficacité maximale, dans une telle plage de vitesses.

La présente invention a pour but de combler cette lacune.

A cet effet, le statoréacteur pour aéronef à vol supersonique et/ou hypersonique, destiné à fonctionner sur une large plage de vitesses, comprenant :
- une entrée de comburant
- au moins un injecteur de combustible ;
- une chambre de combustion à géométrie variable, dans laquelle est effectué le mélange comburant-combustible destiné à être brûlé ; et
- une tuyère d'échappement, destinée à canaliser les gaz sortant de la chambre de combustion,
est caractérisé, selon l'invention, en ce que ladite chambre de combustion et ladite tuyère d'échappement sont formées par deux portions d'un corps de statoréacteur et en ce que ledit corps de statoréacteur présente, au voisinage de la zone de transition entre la chambre de combustion et la tuyère d'échappement, une géométrie évolutive passant progressivement d'une section longitudinale convergente puis divergente, pour des vitesses correspondant à un nombre de Mach inférieur à 6, à une section longitudinale sensiblement constante puis divergente pour des vitesses correspondant à un nombre de Mach supérieur à 7.

Une telle structure assure une adaptation progressive, en fonction de la vitesse de vol, de la géométrie du corps de statoréacteur dans son ensemble mais notamment au voisinage de la transition entre la chambre de combustion et la tuyère d'échappement (col de tuyère) pour conserver, dans la large plage de vitesses indiquée, des conditions de vol optimales, en particulier une valeur de poussée maximale indépendamment des conditions externes (consommation de combustible, pression aérodynamique, profil du flux de comburant (air) dans l'entrée correspondante). En d'autres termes, cela revient notamment à faire "disparaître" le col de tuyère (géométrie convergente-divergente) existant à "faible" vitesse pour en définitive (nombre de Mach égal ou supérieur à environ 8) obtenir une section constante de la chambre de combustion, suivie par la section divergente de la tuyère d'échappement.

On remarquera que le document US-A-3 279 194 décrit un conduit aérothermodynamique à tuyère convergente-divergente, la paroi de fond dudit conduit étant rigidement réglable en inclinaison pour obtenir la détonation continue du mélange combustible-air sur une large plage de nombres de Mach supersoniques et hypersoniques.

Dans le cas où le corps du statoréacteur conforme à l'invention présente la forme générale d'une conduite de section transversale rectangulaire, constituée de parois deux à deux opposées, au moins une desdites parois comporte des plaques articulées entre elles et aux extrémités de ladite paroi par des axes respectifs transversaux à l'extension longitudinale du corps du statoréacteur, la position relative d'au moins certaines desdites plaques définissant la géométrie évolutive de la zone de transition entre la chambre de combustion et la tuyère d'échappement.

De préférence, pour permettre le mouvement relatif d'articulation desdites plaques, au moins certaines d'entre elles sont réalisées en deux parties présentant une zone de chevauchement.

Par ailleurs, il est avantageux que la plaque, du côté de la tuyère d'échappement, présente une section transversale triangulaire, dont un sommet est orienté vers l'intérieur du corps du statoréacteur, les deux autres sommets correspondant aux axes d'articulation respectifs de ladite plaque.

Selon une autre caractéristique de l'invention, l'actionnement desdites plaques articulées et/ou des accroche-flammes est réalisé par un ensemble de vérins ou analogues, pilotés par l'ordinateur de bord de l'aéronef en fonction de signaux issus d'un dispositif de mesure d'un paramètre lié à la vitesse de vol.

De préférence, ledit dispositif de mesure comprend au moins un capteur de poussée et/ou des moyens de mesure de pression statique disposés dans la chambre de combustion.

De plus, la chambre de combustion est subdivisée en une zone de diffusion, où commence la combustion supersonique, et une zone de chambre, où se produit la combustion subsonique, derrière des accroche-flammes escamotables, et où se termine la combustion supersonique.

En outre, les injecteurs de combustible peuvent être disposés immédiatement en amont de la chambre de combustion, dans l'axe de celle-ci et au niveau de l'entrée de comburant, assurant une répartition du combustible dans toute la veine, tandis qu'un dispositif d'allumage est avantageusement prévu dans la chambre de combustion.

Par ailleurs, il est préféré que, comme combustible, du kérosène soit utilisé pour les Mach de vol les plus faibles et de l'hydrogène pour les Mach plus élevés.

Les figures du dessin annexé feront bien comprendre comment l'invention peut être réalisée.

La figure 1 est une vue schématique en perspective d'un exemple de réalisation d'un statoréacteur conforme à l'invention.

La figure 2 est une vue en coupe longitudinale du statoréacteur selon la figure 1.

Les figures 3A-3D illustrent différentes configurations du statoréacteur des figures 1 et 2, correspondant à différents domaines de vitesses.

Le statoréacteur 1, montré sur les figures, pour aéronef à vol supersonique et/ou hypersonique, est destiné à fonctionner dans une large plage de vitesses, c'est-à-dire d'un nombre de Mach de 1-2 à un nombre de Mach de 15-20.

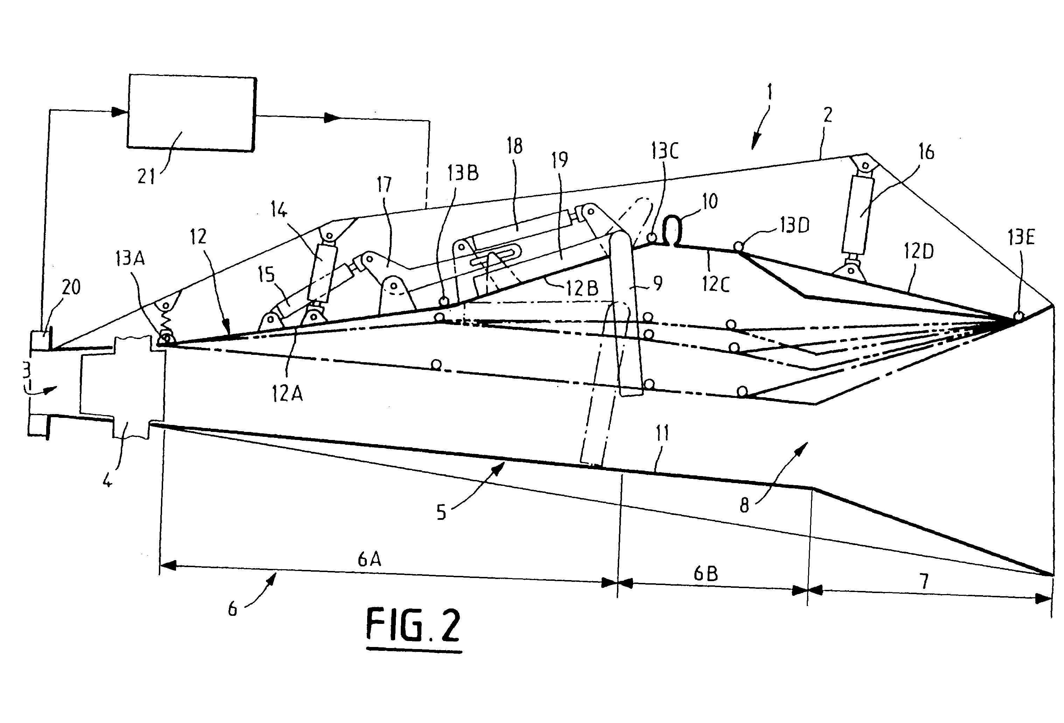

Dans un carter ou enveloppe 2, le statoréacteur 1 comprend :
- une entrée de comburant 3, notamment une prise d'air, en amont du moteur, implantée sous l'intrados du fuselage de l'aéronef associé au statoréacteur,
- des injecteurs de combustible 4, prévus en amont du corps 5 du statoréacteur,
- ledit corps 5 se décomposant, comme on le voit mieux sur la figure 2, en une portion de chambre de combustion 6 et une portion de tuyère 7, définissant entre elles, comme on le verra plus en détail par la suite, une zone de transition (ou col) 8, définie par une géométrie convergente-divergente évoluant, selon l'invention, en fonction de la vitesse, c'est-à-dire du nombre de Mach, de fonctionnement du statoréacteur.

Par ailleurs, la chambre de combustion 6 elle-même se subdivise en une zone de diffusion 6A, où commence la combustion supersonique, et une zone de chambre 6B, où se produit la combustion subsonique, derrière les accroche-flammes 9, et où se termine la combustion supersonique, les injecteurs 4 répartissant le combustible dans toute la veine. Un dispositif d'allumage 10 (figure 2) est prévu au niveau de la chambre 6B. On notera que, comme combustible, on peut envisager d'utiliser du kérosène pour les Mach de vol les plus faibles (jusqu'à Mach 8) (éventuellement avec un barbotate d'hydrogène de façon à faciliter l'allumage du statoréacteur et l'éclatement du jet), puis de l'hydrogène pour les Mach plus élevés. D'autres combustibles, tels que du méthane, des hydrocarbures endothermiques, des combustibles de synthèse, peuvent également être employés pour un moteur de ce type.

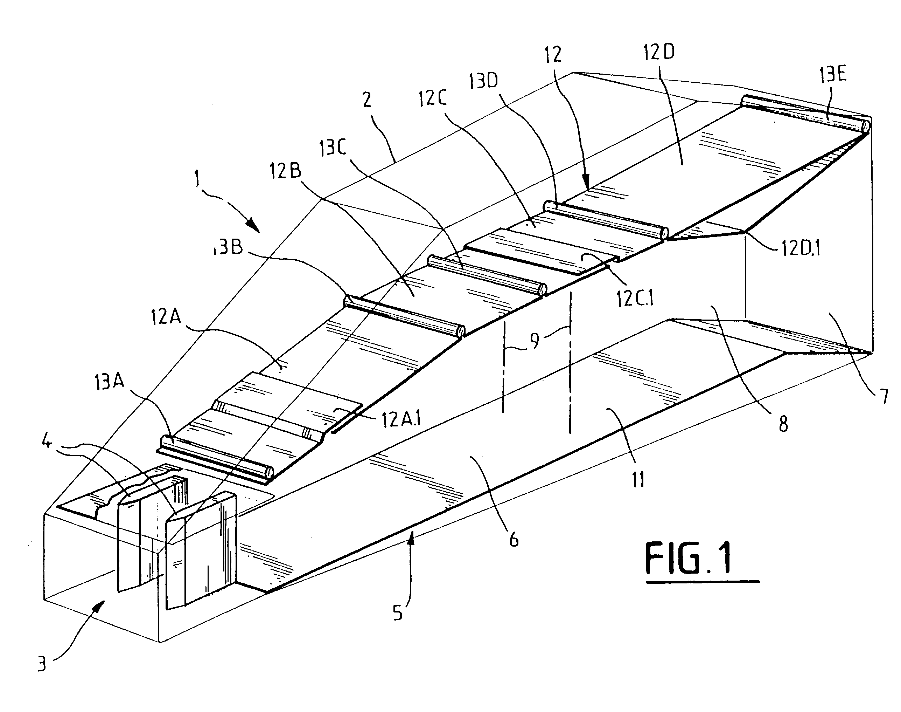

Dans l'exemple de réalisation représenté, le corps 5 du statoréacteur présente, dans son ensemble, une forme de conduite de section transversale rectangulaire, constituée généralement de quatre parois deux à deux opposées, dont seules les parois inférieure 11 et supérieure 12 sont visibles sur les figures. Pour des raisons de clarté, les parois latérales correspondantes n'ont pas été représentées sur le dessin. Pour obtenir la géométrie évolutive objet de l'invention, la paroi supérieure 12 est constituée de plaques 12A-12D articulées entre elles et aux extrémités de la paroi 12 par des axes respectifs 13A-13E transversaux à l'extension longitudinale du corps 5 du statoréacteur. Pour permettre le mouvement relatif d'articulation entre les différentes plaques 12A-12D, certaines d'entre elles, comme montré sur la figure 1, à savoir dans cet exemple les plaques 12A et 12C, sont réalisées en deux parties présentant une zone de chevauchement 12A.1, 12C.1 (non représenté sur la figure 2).

Il est bien entendu qu'une telle configuration n'est nullement limitative, aussi bien en ce qui concerne la paroi mobile "choisie" que le nombre de plaques qui la constituent. En particulier, une autre paroi, ou plusieurs parois, du statoréacteur auraient pu être conçues pour présenter une telle "mobilité" dans le but d'atteindre l'objectif visé.

On notera par ailleurs la structure particulière de la plaque 12D, du côté de la tuyère 7, présentant une section transversale triangulaire de profil convergent/divergent, dont un sommet 12D.1 est orienté vers l'intérieur du corps 5 du statoréacteur et les deux autres sommets correspondent aux axes d'articulation 13D et 13E, structure liée à l'emplacement et à la fonction de ladite plaque 12D, constituant en fait une paroi de la tuyère 7.

La mobilité des plaques 12A-12D est assurée, comme on le voit sur la figure 2, par un ensemble de vérins 14, 15, 16, éventuellement associés à une tringlerie correspondante (17 pour le vérin 15). De façon analogue, un vérin 18 assure le positionnement et, éventuellement, l'escamotage (cavité 19) de chaque accroche-flammes 9. L'ensemble des vérins et tringleries ci-dessus a été omis sur la figure 1 pour des raisons de clarté du dessin.

La mise en oeuvre du statoréacteur suppose que, ayant reçu un signal d'un dispositif 20 qui mesure la poussée, qui est une fonction linéaire intégrale de l'efficacité opératoire du statoréacteur, l'ordinateur de bord 21 de l'aéronef tend constamment à atteindre une géométrie optimale de la partie de passage de la chambre de combustion (corps 5 du statoréacteur) grâce à l'actionnement correspondant des vérins de commande 14, 15, 16 des plaques articulées 12A-12D de la paroi 12. Comme dispositif de mesure, on peut envisager l'utilisation d'un capteur de poussée, détectant la valeur de la force longitudinale (axiale) engendrée pendant le fonctionnement du statoréacteur, c'est-à-dire la poussée. La valeur de la poussée est déterminée par l'efficacité du processus opératoire : l'efficacité de la combustion et le rapport de récupération de pression totale (fonction des pertes hydrauliques totales du statoréacteur). Le niveau de ces deux paramètres dépend de la géométrie de la partie de passage (à chaque point de la trajectoire) et de l'efficacité des moyens de stabilisation (accroche-flammes 9), qui représentent en fait également une commande géométrique.

La régulation (l'ordinateur de bord 21) agit sur le système de commande pour avoir les performances maximales à partir essentiellement de quelques mesures de pression judicieusement prévues dans le moteur et de diverses autres informations (débits de combustible, vitesse de l'aéronef, par exemple). En fait, le capteur de poussée est surtout utile lors des essais de mise au point au sol et éventuellement en vol, afin de vérifier que la régulation envisagée permet bien de maximiser les performances propulsives.

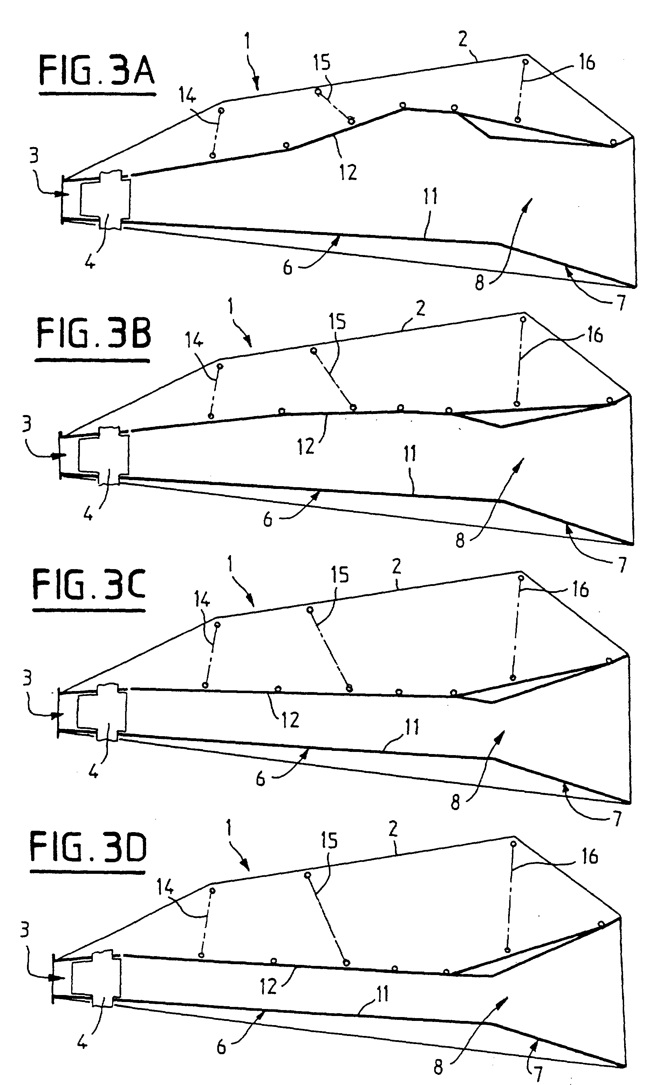

Pour une vitesse de vol comprise dans la plage de Mach 1-2 à environ Mach 6, la chambre de combustion fonctionne selon un régime de combustion subsonique, correspondant à l'extension des accroche-flammes 9, placés dans le diffuseur de la chambre, dans la partie de passage, en modifiant la géométrie de la partie de passage en fonction des ordres envoyés par l'ordinateur de bord 21, recevant et traitant les signaux du capteur de poussée 20. La chambre de combustion présente une section transversale de passage maximale dans un régime de combustion subsonique pour un nombre de Mach 1-2 (figure 3A), qui décroît vers les nombres de Mach plus élevés (≤ 6), figure 3B, en "rapprochant" les plaques articulées 12A-12D de la paroi 12 de la paroi opposée 11, tout en conservant une géométrie de col (convergente-divergente) dans la zone de transition entre la chambre de combustion et la tuyère.

Les accroche-flammes 9 ralentissent le flux supersonique et un choc normal ou un réseau de chocs équivalent s'établit entre eux et les injecteurs 4 (c'est-à-dire dans le diffuseur) et, après ce choc, le flux devient subsonique. Le combustible s'écoulant des injecteurs est délivré dans le flux, le dispositif d'allumage 10 est actionné et enflamme le mélange air-combustible. Après les accroche-flammes, le gaz tourbillonne et des flammes stables, c'est-à-dire des zones de stabilisation, apparaissent. Ces zones de flammes stables favorisent le processus de combustion dans la chambre.

Le positionnement des injecteurs, tels que montrés, en amont de la chambre de combustion permet de distribuer régulièrement le combustible dans le flux d'air et d'obtenir la désintégration des courants de combustible, tout en garantissant une mise sous pression sûre de la chambre de combustion, dans la zone où se produit la commande géométrique de la partie de passage. Leur positionnement dans la zone de commande compliquerait sérieusement et rendrait même impossible dans certaines conditions la mise sous pression de la chambre de combustion.

Comme on l'a déjà noté, alors que la vitesse de vol augmente, le volume de la partie de passage et celui de la zone de transition entre la chambre de combustion et la tuyère (col 8) diminuent. Lorsque la vitesse de vol dépasse environ Mach 6, il est nécessaire de prévoir une combustion supersonique dans la chambre de combustion. Dans ce but, les accroche-flammes 9 sont retirés du flux et la partie de col (géométrie convergente-divergente) disparaît en conservant une section uniforme de la partie de passage de la chambre de combustion se raccordant directement à la portion de tuyère divergente 7 (figure 3D). Dans ce cas, le choc normal est transformé en un système de chocs obliques, et la combustion se stabilise après que les chocs obliques ont joué le rôle de stabilisateurs de combustion. Ayant reçu le signal correspondant du capteur de poussée 20, l'ordinateur 21 règle la forme du corps 5 du statoréacteur conformément à une poussée maximale.

En fait, la géométrie à section constante précitée de la partie de passage ne peut être mise en oeuvre qu'après disparition des risques de blocage thermique (au-dessus de Mach 7-8 environ). Dans le domaine de vitesses intermédiaire (Mach 6-7 environ) entre les configurations des figures 3B et 3D, on met en oeuvre une géométrie avec col escamoté, qui doit être suffisamment divergente pour fonctionner en combustion supersonique sans risque de blocage thermique (figure 3C).

## Revendications

1. Statoréacteur pour aéronef à vol supersonique et/ou hypersonique, destiné à fonctionner sur une large plage de vitesses, comprenant :
- une entrée de comburant (3)
- au moins un injecteur de combustible (4) ;
- une chambre de combustion (6) à géométrie variable, dans laquelle est effectué le mélange comburant-combustible destiné à être brûlé ; et
- une tuyère d'échappement (7), destinée à canaliser les gaz sortant de la chambre de combustion,
caractérisé en ce que ladite chambre de combustion (6) et ladite tuyère d'échappement (7) sont formées par deux portions d'un corps de statoréacteur (5) et en ce que ledit corps de statoréacteur (5) présente, au voisinage de la zone de transition (8) entre la chambre de combustion (6) et la tuyère d'échappement (7), une géométrie évolutive passant progressivement d'une section longitudinale convergente puis divergente, pour des vitesses correspondant à un nombre de Mach inférieur à 6, à une section longitudinale sensiblement constante puis divergente pour des vitesses correspondant à un nombre de Mach supérieur à 7.

2. Statoréacteur selon la revendication 1, dans lequel ledit corps de statoréacteur (5) présente la forme générale d'une conduite de section transversale rectangulaire, constituée de parois deux à deux opposées,
caractérisé en ce qu'au moins une (12) desdites parois comporte des plaques (12A-12D) articulées entre elles et aux extrémités de ladite paroi (12) par des axes respectifs (13A-13E) transversaux à l'extension longitudinale du corps du statoréacteur (5), la position relative d'au moins certaines desdites plaques définissant la géométrie évolutive de la zone de transition (8) entre la chambre de combustion (6) et la tuyère d'échappement (7).

3. Statoréacteur selon la revendication 2,
caractérisé en ce que, pour permettre le mouvement relatif d'articulation desdites plaques, au moins certaines d'entre elles (12A, 12C) sont réalisées en deux parties présentant une zone de chevauchement (12A.1, 12C.1).

4. Statoréacteur selon la revendication 2 ou la revendication 3,
caractérisé en ce que la plaque (12D), du côté de la tuyère d'échappement (7), présente une section transversale triangulaire, dont un sommet (12D.1) est orienté vers l'intérieur du corps du statoréacteur (5), les deux autres sommets correspondant aux axes d'articulation respectifs (13D, 13E) de ladite plaque (12D).

5. Statoréacteur selon l'une quelconque des revendications 2 à 4,
caractérisé en ce que l'actionnement desdites plaques articulées (12A-12D) et/ou des accroche-flammes (9) est réalisé par un ensemble de vérins (14, 15, 16, 18) ou analogues, pilotés par l'ordinateur de bord (21) de l'aéronef en fonction de signaux issus d'un dispositif de mesure (20) d'un paramètre lié à la vitesse de vol.

6. Statoréacteur selon la revendication 5,
caractérisé en ce que ledit dispositif de mesure comprend au moins un capteur de poussée (20) et/ou des moyens de mesure de pression statique disposés dans la chambre de combustion.

7. Statoréacteur selon l'une quelconque des revendications 1 à 6,
caractérisé en ce que la chambre de combustion (6) est subdivisée en une zone de diffusion (6A), où commence la combustion supersonique, et une zone de chambre (6B), où se produit la combustion subsonique, derrière des accroche-flammes escamotables (9), et où se termine la combustion supersonique.

8. Statoréacteur selon l'une quelconque des revendications 1 à 7,
caractérisé en ce que les injecteurs de combustible (4) sont disposés immédiatement en amont de la chambre de combustion (6), dans l'axe de celle-ci et au niveau de l'entrée de comburant (3), assurant une répartition du combustible dans toute la veine.

9. Statoréacteur selon l'une quelconque des revendications 1 à 8,
caractérisé en ce qu'un dispositif d'allumage (10) est prévu dans la chambre de combustion.

10. Statoréacteur selon l'une quelconque des revendications 1 à 9,
caractérisé en ce que, comme combustible, du kérosène est utilisé pour les nombres de Mach inférieurs à 8 et de l'hydrogène pour les nombres de Mach supérieurs à 8.

## Patentansprüche

1. Staustrahltriebwerk für Über- und/oder Hyperschallflugzeug, das in einem großen Geschwindigkeitsbereich eingesetzt werden soll und
- einen Sauerstoffträgereinlauf (3);
- mindestens eine Brennstoffeinspritzdüse (4);
- eine Brennkammer (6) mit veränderlicher Geometrie, in der das Sauerstoffträger-Brennstoffgemisch hergestellt wird, das verbrannt werden soll; und
- eine Auspuffdüse (7) zur Ableitung der aus der Brennkammer austretenden Gase, umfasst, dadurch gekennzeichnet, dass die genannte Brennkammer (6) und die genannte Auspuffdüse (7) von zwei Teilen eines Staustrahltriebwerkkörpers (5) gebildet werden und dass der genannte Staustrahltriebwerkkörper (5) in der Nähe des Übergangsbereichs (8) zwischen der Brennkammer (6) und der Auspuffdüse (7) eine veränderliche Geometrie besitzt, die allmählich von einem konvergierenden, dann divergierenden, Geschwindigkeiten von einer Machzahl unter 6 entsprechenden Längsabschnitt in einen deutlich konstanten, dann divergierenden, Geschwindigkeiten von einer Machzahl über 7 entsprechenden Abschnitt übergeht.

2. Staustrahltriebwerk nach Anspruch 1, in dem der genannte Staustrahltriebwerkkörper (5) die allgemeine Form einer Leitung mit rechteckigem Querschnitt besitzt, die aus jeweils zwei einander gegenüberliegenden Wänden besteht,
dadurch gekennzeichnet, dass mindestens eine (12) der genannten Wände Platten (12A-12D) umfasst, die untereinander und an den Enden der genannten Wand (12) durch entsprechende quer zur Längsverlängerung des Körpers des Staustrahltriebwerks (5) liegende Achsbolzen (13A-13E)schwenkbar sind, wobei die relative Lage von mindestens einigen dieser Platten die veränderliche Geometrie des Übergangsbereichs (8) zwischen der Brennkammer (6) und der Auspuffdüse (7) bestimmt.

3. Staustrahltriebwerk nach Anspruch 2,
dadurch gekennzeichnet, dass, um die relative Schwenkbewegung der genannten Platten zu ermöglichen, mindestens bestimmte von ihnen (12A, 12C) aus zwei Teilen gefertigt sind, die einen Überlappungsbereich (12A.1, 12C.1) aufweisen.

4. Staustrahltriebwerk nach Anspruch 2 oder Anspruch 3,
dadurch gekennzeichnet, dass die Platte (12D) auf der Seite der Auspuffdüse (7) einen dreieckigen Querschnitt hat, von dem eine Spitze (12D.1) auf den Innenraum des Staustrahltriebwerkkörpers (5) gerichtet ist, wobei die beiden anderen Spitzen den jeweiligen Schwenkachsen (13D, 13E) der genannten Platte (12D) entsprechen.

5. Staustrahltriebwerk nach einem beliebigen der Ansprüche 2 bis 4,
dadurch gekennzeichnet, dass die Betätigung der genannten Gelenkplatten (12A-12D) und/oder der Flammenhalter (9) durch eine Gruppe von Kolben-Zylinder-Einheiten (14, 15, 16, 18) oder analogen Bauteilen erfolgt, die vom Bordcomputer (21) des Flugzeugs in Abhängigkeit von Signalen gesteuert werden, die von einer Vorrichtung (20) zur Messung einer mit der Fluggeschwindigkeit verbundenen Parameters stammen.

6. Staustrahltriebwerk nach Anspruch 5,
dadurch gekennzeichnet, dass das genannte Messgerät mindestens einen Schubkraftmessfühler (20) und/oder in der Brennkammer angeordnete Mittel zur Messung des statischen Drucks umfasst.

7. Staustrahltriebwerk nach einem beliebigen der Ansprüche 1 bis 6,
dadurch gekennzeichnet, dass die Brennkammer (6) unterteilt ist in einen Diffusionsbereich (6A), in dem die Überschallverbrennung beginnt, und einen Kammerbereich (6B), in dem die Unterschallverbrennung erfolgt, der hinter den einziehbaren Flammenhaltern (9) liegt und in dem die Überschallverbrennung endet.

8. Staustrahltriebwerk nach einem beliebigen der Ansprüche 1 bis 7,
dadurch gekennzeichnet, dass die Brennstoffeinspritzdüsen (4) direkt vor der Brennkammer (6) in deren Achse und in Höhe des Sauerstoffträgereinlaufs (3) angeordnet sind, wodurch die Verteilung im gesamten Strom gewährleistet wird.

9. Staustrahltriebwerk nach einem beliebigen der Ansprüche 1 bis 8,
dadurch gekennzeichnet, dass eine Zündvorrichtung (10) in der Brennkammer vorgesehen ist.

10. Staustrahltriebwerk nach einem beliebigen der Ansprüche 1 bis 9,
dadurch gekennzeichnet, dass für die Machzahlen unter 8 als Brennstoff Kerosin und Wasserstoff für die Machzahlen über 8 verwendet wird.

## Claims

1. Aircraft ram jet engine for supersonic and/or hypersonic flight, intended to operate over a wide range of speeds, comprising:
- an oxidant inlet (3),
- at least one fuel injector (4),
- a variable-geometry combustion chamber (6), in which the mixture of oxidant and fuel intended to be burned is produced; and
- a jet pipe (7) intended to channel the gases leaving the combustion chamber,
characterized in that the said combustion chamber (6) and the said jet pipe (7) are formed by two portions of a ram jet engine body (5), and characterized in that the said ram jet engine body (5), in the vicinity of the transition region (8) between the combustion chamber (6) and the jet pipe (7), has a changing geometry passing progressively from a convergent then divergent longitudinal section, for speeds corresponding to a Mach number lower than 6, to a substantially constant then divergent longitudinal section for speeds corresponding to a Mach number greater than 7.

2. Ram jet engine according to Claim 1, in which the said ram jet engine body (5) has the general shape of a duct of rectangular cross section, consisting of opposed pairs of walls,
characterized in that at least one (12) of the said walls includes plates (12A-12D) articulated with respect to each other and to the ends of the said wall (12) by respective spindles (13A-13E) transversal to the longitudinal extension of the body of the ram jet engine (5), the relative position of at least some of the said plates defining the changing geometry of the transition region (8) between the combustion chamber (6) and the jet pipe (7).

3. Ram jet engine according to Claim 2, characterized in that, in order to allow the relative articulation movement of the said plates, at least some of them (12A, 12C) are produced in two parts having a region of overlap (12A.1, 12C.1).

4. Ram jet engine according to Claim 2 or Claim 3, characterized in that, the plate (12D) at the jet pipe (7) end has a triangular cross section, one vertex (12D.1) of which is turned towards the inside of the body of the ram jet engine (5), the other two vertices corresponding to the respective articulation spindles (13D, 13E) of the said plate (12D).

5. Ram jet engine according to any one of Claims 2 to 4, characterized in that the said articulated plates (12A-12D) and/or flame holders (9) are actuated by a set of jacks (14, 15, 16, 18) or the like, driven by the on-board computer (21) of the aircraft on the basis of signals originating from a device (20) for measuring a parameter related to the flight speed.

6. Ram jet engine according to Claim 5, characterized in that the said measuring device comprises at least one thrust sensor (20) and/or static pressure measuring means which are arranged in the combustion chamber.

7. Ram jet engine according to any one of Claims 1 to 6, characterized in that the combustion chamber (6) is subdivided into a diffusion region (6A), where supersonic combustion starts, and a chamber region (6B), where subsonic combustion takes place, behind the retractable flame holders (9) and where supersonic combustion terminates.

8. Ram jet engine according to any one of Claims 1 to 7, characterized in that the fuel injectors (4) are arranged immediately upstream of the combustion chamber (6), in the axis thereof and in the region of the oxidant inlet (3), ensuring distribution of the fuel throughout the stream.

9. Ram jet engine according to any one of Claims 1 to 8, characterized in that an ignition device (10) is provided in the combustion chamber.

10. Ram jet engine according to any one of Claims 1 to 9, characterized in that, as fuel, kerosene is used for the Mach numbers lower than 8, and hydrogen is used for the Mach numbers greater than 8.
